# EUROPÄISCHE PATENTANMELDUNG

(11) **EP 1 496 664 A2**
(43) Veröffentlichungstag der Anmeldung: **12.01.2005**
(21) Anmeldenummer: 04016223.2
(22) Anmeldetag: 09.07.2004
(51) Int. Cl.: H04L 29/06

(54) **Vorrichtung und Verfahren sowie Sicherheitsmodul zur Sicherung eines Datenzugriffs eines Kommunikationsteilnehmers auf mindestens eine Automatisierungskomponente eines Automatisierungssystems**

(30) Priorität: 10.07.2003 DE 10331307
(71) Anmelder: SIEMENS AKTIENGESELLSCHAFT, 80333 München (DE)
(72) Erfinder: Arnold, Johann, 90530 Wendelstein (DE); Gerlach, Hendrik, 91058 Erlangen (DE); Richter, Siegfried, 91207 Lauf (DE); Talanis, Thomas, 91336 Heroldsbach (DE); Volkmann, Frank, 90475 Nürnberg (DE)

(57) **Zusammenfassung**

Für einen sicheren Schutz eines privaten Netzes vor unberechtigtem Zugriff z. B. aus einem Büronetz umfasst erfindungsgemäß eine Vorrichtung (1) zur Sicherung eines Datenzugriffs eines Kommunikationsteilnehmers (2) auf mindestens eine Automatisierungskomponente (4) eines Automatisierungssystems (6) innerhalb eines Automatisierungsnetzes (7) ein Sicherheitsmodul (14) mit mindestens einem Filter (16a bis 16z) zur Überwachung und Prüfung einer Kommunikationsanfrage (K), wobei in einem ersten Filter (16a) anhand eines der Kommunikationsanfrage (K) zugeordneten, gesicherten Authentifikationszeichens (T) zwischen dem Kommunikationsteilnehmer (2) und dem Sicherheitsmodul (14) ein authentifizierter Datenverkehr aufgebaut wird, in welchem eine der Kommunikationsanfrage (K) zugrunde liegende Datenübertragung in Abhängigkeit des Prüfungsergebnisses freigeschaltet oder gesperrt wird.

## Beschreibung

Die Erfindung betrifft eine Vorrichtung zur Sicherung eines Datenzugriffs auf mindestens eine Automatisierungskomponente eines Automatisierungssystems, insbesondere zur Sicherung der Kommunikation eines Kommunikationsteilnehmers oder Netzteilnehmers, z. B. eines Servers, eines Programmiergerätes, einer Bedien- oder Beobachtungsstation oder eines Servicegeräts zur Wartung oder Diagnose, innerhalb eines gemeinsamen Automatisierungsnetzes mit mindestens einer Automatisierungskomponente eines Automatisierungssystems, z. B. mit einem Automatisierungsgerät oder mit einem aus mehreren Automatisierungsgeräten gebildeten Automatisierungsteilnetz. Des Weiteren betrifft die Erfindung ein Sicherheitsmodul und ein Verfahren zur Sicherung eines Steuer- oder Datenzugriffs auf eine Automatisierungskomponente, d. h. zur Sicherung der Kommunikation eines Kommunikationsteilnehmers mit einer Automatisierungskomponente.

Als Automatisierungssystem werden im Folgenden Geräte und Installationen bezeichnet, die zur Steuerung und/oder Überwachung eines technischen Prozesses, z. B. eines Fertigungsprozesses, eingesetzt werden und an sich bekannt sind. Zu den Geräten gehören z. B. speicherprogrammierbare Steuerungen, dezentrale Peripheriegeräte, Bedien- und Beobachtungssysteme oder dergleichen, welche zu einem gemeinsamen Automatisierungsnetz über eine Datenübertragungseinheit, z. B. ein LAN-Netzwerk (LAN = Local Area Network), miteinander verbunden sind. Solche Geräte oder Netze werden zusammenfassend als Automatisierungskomponenten bezeichnet. Zu den Installationen gehören auch Sensoren oder Aktoren zur Interaktion mit dem technischen Prozess und die zwischen den Automatisierungskomponenten und einzelnen Sensoren und Aktoren erforderliche Verdrahtung. Je nach Art und Aufbau des Automatisierungssystems kann dieses hierarchisch in mehreren Ebenen, z. B. Prozess-, Automatisierungs- und zentrale Leitebene, ausgeführt sein. Dabei sind Komponenten der jeweiligen Ebene über eine zugehörige Datenübertragungseinheit miteinander verbunden. Beispielsweise sind Automatisierungskomponenten der Prozessebene und/oder der Automatisierungsebene horizontal mittels eines so genannten Feldbussystems und zur nächst höheren oder niederen Ebene, z. B. zur zentralen Leit- oder Steuerebene, vertikal mittels eines Ethernetbussystems miteinander verbunden. Zunehmend erfolgt heute die horizontale Verbindung der Automatisierungskomponenten einer Ebene ebenfalls mittels eines Ethernetbussystems.

Üblicherweise sind derartige Automatisierungssysteme lokal begrenzt ausgebildet. Mit zunehmender Komplexität des zu steuernden technischen Fertigungsprozesses oder einer zu steuernden technischen Anlage sowie aufgrund der häufig großen Entfernung von Teilkomponenten des Fertigungsprozesses oder der Anlage untereinander oder von der zentralen Ebene, z. B. einer Projektierungsebene, zu der Prozess- oder Automatisierungsebene besteht der Wunsch eines Kommunikationsteilnehmers zu Projektierungs-, Service-, Wartungs- oder Diagnosezwecken, z. B. aus den Räumlichkeiten der zentralen Leitebene, auf Komponenten der Automatisierungs- oder Prozessebene zugreifen zu können. Dabei entspricht der Kommunikationsteilnehmer einem Teilnehmer in einem ersten Netz, z. B. in einem Teilnetz der zentralen Leitebene (auch Büronetz genannt), und die Automatisierungskomponente einem Teilnehmer in einem zweiten Netz, z. B. einem Teilnetz in der Prozess- oder Automatisierungsebene (auch Produktions- oder Zellennetz genannt). Je nach Art und Ausbildung des Automatisierungssystems sind die einzelnen Netze - Büronetz bzw. Produktionsnetz (= Teilnetze) - Teil eines gemeinsamen Netzes, z. B. eines gemeinsamen Automatisierungsnetzes (auch Anlagen- oder Firmennetz genannt). Im Allgemeinen kann dabei innerhalb des gemeinsamen Automatisierungsnetzes vom "privaten" Büronetz über eine gemeinsame Datenübertragungseinheit auf das angebundene "private" Produktionsnetz zugegriffen werden. Üblicherweise sind gerade Komponenten der zentralen Leitebene zunehmend mit Programmen, wie z. B. E-Mail, Internet, versehen, welche über eine so genannte Firewall mit Teilnehmern eines öffentlichen Netzes, z. B. des Internets, kommunizieren, so dass durch einen gleichen Netzzugang Teilnehmer des Büronetzes oder gar externe Teilnehmer ungesichert und somit ungeschützt Zugriff auf das Produktionsnetz haben können. Das heißt, dass das so genannte Firmennetz unterteilt ist in ein unsicheres Büronetz und in ein gegenüber Fremdeingriffen besonders zu sicherndes Produktions- oder Prozessnetz.

Nachteilig dabei ist, dass ein beispielsweise zum Schutz des privaten Automatisierungsnetzes mit seinen Teilnetzen gegenüber einem öffentlichen Netz vorgesehener NAT-Router in seiner Konfiguration nicht zum Schutz vor einer Übertragung von so genannter "Viren-Software" oder "Agenten-Software" durch "Hacker-Angriffe" in das "private" Automatisierungsnetz geeignet ist. Hierdurch bedingt, kann es aufgrund des unsicheren öffentlichen Netzes und des unsicheren Büronetzes im Automatisierungsnetz zu ungewollten Fremdeingriffen oder zu so genannten Angriffen auf das Automatisierungsnetz durch fehlerbehaftete Daten oder Software (= so genannte Hacker-Angriffe) kommen, welche wiederum ungewünschte Auswirkungen auf das Produktions- oder Prozessnetz und somit auf die Steuerung und/oder Regelung der technischen Anlage oder des Fertigungsprozesses haben können. Darüber hinaus kann es auch bei der Kopplung der Teilnetze innerhalb des privaten Netzes - des Automatisierungsnetzes oder Firmennetzes - zu einem nichtberechtigten Zugriff beispielsweise eines Büroteilnehmers auf eine Automatisierungskomponente kommen.

Der Erfindung liegt daher die Aufgabe zugrunde, eine Vorrichtung zur Sicherung eines Daten- oder Signalzugriffs auf mindestens eine Automatisierungskomponente eines Automatisierungssystems, insbesondere zur Sicherung der Kommunikation eines Kommunikationsteilnehmers mit mindestens einer Automatisierungskomponente eines Automatisierungssystems innerhalb eines gemeinsamen Automatisierungsnetzes, anzugeben, welche eine besonders sichere Datenübertragung ermöglicht. Des Weiteren ist ein besonders einfaches Sicherheitsmodul und ein besonders einfaches Verfahren zur Sicherung eines Datenzugriffs bei einer Kommunikation zwischen einem Kommunikationsteilnehmer und einer Automatisierungskomponente anzugeben.

Die erstgenannte Aufgabe wird erfindungsgemäß gelöst durch eine Vorrichtung zur Sicherung eines Datenzugriffs auf mindestens eine Automatisierungskomponente eines Automatisierungssystems innerhalb eines Automatisierungsnetzes, wobei ein Sicherheitsmodul mit mindestens einem Filter zur Überwachung und Prüfung einer Kommunikationsanfrage vorgesehen ist, wobei in einem ersten Filter anhand eines der Kommunikationsanfrage zugeordneten, gesicherten Authentifikationszeichens (= Ticket oder Zertifikat, im Weiteren als Ticket bezeichnet) zwischen einem der Kommunikationsteilnehmer und dem Sicherheitsmodul ein authentifizierter Datenverkehr aufgebaut wird, in welchem eine der Kommunikationsanfrage zugrunde liegende Datenübertragung in Abhängigkeit des Prüfungsergebnisses freigeschaltet oder gesperrt wird.

Die Erfindung geht dabei von der Überlegung aus, dass ein besonders sicherer Zugriff eines Kommunikationsteilnehmers auf eine Automatisierungskomponente eines Automatisierungssystems oder umgekehrt auch bei einer beliebigen Kommunikationsanfrage, insbesondere zwischen gleichen und/oder verschiedenen Ebenen eines Automatisierungsnetzes, ermöglicht sein sollte. Insbesondere sollten zum Schutz der Teilnehmer (= der Automatisierungskomponente) eines Teilnetzes, z. B. eines Produktions- oder Prozessnetzes, und somit zum Schutz der Steuerung und/oder Regelung der technischen Anlage und/oder des Fertigungsprozesses nur solche Kommunikationsanfragen bearbeitet werden, welche relevant und berechtigt sind für die betreffende Automatisierungskomponente, für den zugrunde liegenden Fertigungsprozess und/oder für die zugrunde liegende Anlage. Daher sollte die sich aus fortlaufenden und beliebigen Kommunikationsanfragen zusammensetzende Datenübertragung derart geprüft werden, dass die Automatisierungskomponente so lange von dem Kommunikationsteilnehmer getrennt wird, d. h. logisch und/oder physikalisch getrennt wird, bis die Relevanz und/oder Berechtigung der Kommunikationsanfrage für die betreffende Automatisierungskomponente sicher identifiziert ist. Hierzu ist ein zwischen der Automatisierungskomponente und dem Kommunikationsteilnehmer geschaltetes Sicherheitsmodul vorgesehen, welches mittels mindestens eines Filters anhand eines der Kommunikationsanfrage zugeordneten Tickets einen authentifizierten Datenverkehr aufbaut. Unter Ticket wird hierbei ein gesichertes Authentifikationszeichen für ein Authentifizierungsverfahren, z. B. für das bekannte Authentifizierungsverfahren "Kerberos", siehe IETF RFC 1510 (IETF = Internet Engineering Task Force, RFC = Request for Commands, vgl. auch http://www.ietf.org/rfc/rfc1510.txt), oder für ein bekanntes Zertifizierungsverfahren (= so genanntes "Public-Key-Zertifikat") verstanden, bei welchem vor Aufbau einer Netzwerkverbindung oder Kommunikationsverbindung die Authentifizierung der beteiligten Teilnehmer - des Kommunikationsteilnehmers und ggf. der Automatisierungskomponente - ermittelt wird.

Zweckmäßigerweise ist das Sicherheitsmodul der Automatisierungskomponente vorgeschaltet. Mit anderen Worten: Das Sicherheitsmodul ist zwischen dem Kommunikationsteilnehmer und der Automatisierungskomponente angeordnet. Bedingt durch eine derartige separate Anordnung des Authentifizierungsverfahrens in einem separaten Sicherheitsmodul können auch nicht-ticketfähige Automatisierungskomponenten durch Vorschaltung des ticketfähigen Sicherheitsmoduls an einer gesicherten und/oder verschlüsselten Datenübertragung teilnehmen. Für eine einfache Nachrüstung des Sicherheitsmoduls in bestehende Automatisierungssysteme, ohne dass Änderungen in den nicht-ticketfähigen Automatisierungskomponenten vorzunehmen sind, ist dem Sicherheitsmodul für eine Kommunikationsanfrage diejenige Adresse zugeordnet, die der Automatisierungskomponente der betreffenden Kommunikationsanfrage entspricht. Dabei führt das Sicherheitsmodul den authentifizierten Datenverkehr bevorzugt als Stellvertreter der Automatisierungskomponente aus. Insbesondere ältere Automatisierungssysteme, welche nicht-ticketfähig sind, können unter Vorschaltung des Sicherheitsmoduls z. B. zur Prüfung eines gemeinsamen Tickets oder Zertifikats in ein modernes ticketfähiges Automatisierungssystem integriert werden.

Mit anderen Worten: Das vorgeschaltete Sicherheitsmodul ist eine Art Stellvertreter für nicht-ticketfähige Endgeräte, wie z. B. nicht-ticketfähige Automatisierungskomponenten. Durch Vorschaltung des Sicherheitsmoduls und somit Integration in ein bestehendes Automatisierungssystem ist eine Umprojektierung der bestehenden Automatisierungskomponenten nicht erforderlich, da das Sicherheitsmodul in Art einer Adressierungstransparenz die Adressen der Automatisierungskomponenten widerspiegelt. Somit ist bei einer Modernisierung von komplexen technischen Anlagen, wie z. B. von Kraftwerks- oder Chemieanlagen, eine Nachrüstung und/oder schrittweise Einbindung von älteren Automatisierungsteilsystemen in moderne ticketfähige Automatisierungssysteme ermöglicht. Dabei kann das Sicherheitsmodul als Stellvertreter für nicht-ticketfähige Geräte oder Komponenten arbeiten.

In einer möglichen Ausführungsform arbeitet der Stellvertreter transparent, so dass er nachträglich in eine bereits bestehende Anlage einfügbar ist, ohne dass Adress-Einstellungen in der vorhandenen Anlage geändert werden müssen. Ein derartiges Sicherheitsmodul kann auch als transparenter Ticket-Stellvertreter oder Ticket-Proxy bezeichnet werden. Das Sicherheitsmodul kann in einem eigenen elektrischen Gerät, insbesondere als Softwareapplikation oder in Form eines funktionsäquivalenten ASIC (= anwenderspezifischer integrierter Schaltkreis), realisiert sein. Alternativ kann das Sicherheitsmodul als ein im Automatisierungssystem vorhandenes elektrisches Gerät, z. B. als eine so genannte Zentraleinheit einer speicherprogrammierbaren Steuerung oder als ein so genannter Kommunikationsprozessor oder als ein Personal Computer, dessen Funktionalität um die Filterfunktionen ergänzt ist, ausgebildet sein. Alternativ oder zusätzlich kann dem Sicherheitsmodul eine eigene Adresse für eine Kommunikationsanfrage zugeordnet sein.

Je nach Sicherungsgrad der technischen Anlage kann das Sicherheitsmodul weitere Filter umfassen, anhand derer verschiedene die Kommunikation zwischen der Automatisierungskomponente und dem Kommunikationsteilnehmer repräsentierende Faktoren oder Kriterien bestimmt, überwacht und/oder geprüft werden. Je nach Art und Ausbildung des jeweiligen Filters können diese zusätzlich zeit- und/oder zustandsgesteuert ausgebildet sein.

Dabei wird als ein erstes Kriterium mittels eines ersten Filters eine objektbezogene und dienstbezogene Authentizitätsprüfung ausgeführt. Als erstes Kriterium wird bei einer objektbezogenen Authentizitäts- oder Echtheitsprüfung die einer Kommunikationsanfrage zugrunde liegende Kommunikationsverbindung geprüft. Die Kommunikationsverbindungen werden beispielsweise anhand von gesicherten und zu übertragenden sowie ggf. verschlüsselten Tickets und/oder Zertifikaten für den Sender und den zugehörigen Empfänger geprüft, wodurch ein Sender und/oder ein Empfänger eindeutig und somit sicher authentifiziert werden kann. Mit anderen Worten: Die objektbezogene Authentizitätsprüfung wird anhand von gesicherten und/oder verschlüsselten Authentizitätszeichen (= Ticket) der miteinander kommunizierenden Teilnehmer ausgeführt. Dabei kann sowohl die jeweilige Automatisierungskomponente als auch der Kommunikationsteilnehmer je nach Art der Kommunikationsverbindung, insbesondere in Abhängigkeit von der Übertragungsrichtung der betreffenden Kommunikationsverbindung, Sender und/oder Empfänger sein. Des Weiteren kann je nach Art und hierarchischen Aufbau des Automatisierungssystems mehreren, zu einer Gruppe zusammengefassten Automatisierungskomponenten ein gemeinsames Ticket oder Zertifikat zugeordnet werden. Beispielsweise bilden mehrere, durch ein Kommunikationsteilnetz (auch Subnetz oder Zellennetz bezeichnet) miteinander verbundene Automatisierungskomponenten eine Gruppe, der ein einziges Ticket zugeordnet wird.

Für die dienstbezogene Authentizitätsprüfung umfasst das erste Filter zweckmäßigerweise eine Anzahl von der betreffenden Kommunikationsanfrage zugrunde liegenden Diensten. Unter Dienste werden hierbei beispielsweise ein E-Mail-Dienst, ein Internet-Dienst, ein web-basierter Service-Dienst verstanden. Zur dienstbezogenen Authentizitätsprüfung sind die diesen Diensten zugrunde liegenden Protokolle, z. B. FTP (= File Transfer Protocol für Dateienübertragungen), http (= Hypertext Transfer Protocol für Internet-Anwendungen), SMTP (= Simple Mail Transfer Protocol für die Übertragung von E-Mails), beispielsweise anhand von Portnummern oder Servicenamen hinterlegt und dem jeweiligen Dienst und/oder der jeweiligen Kommunikationsanfrage zugeordnet. Alternativ oder zusätzlich können die Dienste der jeweiligen Kommunikationsverbindung, d. h. der jeweiligen Automatisierungskomponente und/oder dem jeweiligen Kommunikationsteilnehmer, zugeordnet sein. Hierdurch ist eine Autorisierung der Teilnehmer der Kommunikationsverbindung für mindestens einen der Kommunikationsanfrage zugeordneten Dienst sichergestellt.

Alternativ oder zusätzlich umfasst das Sicherheitsmodul ein zweites Filter zur objektbezogenen und dienstbezogenen Zugriffsprüfung bzw. ein drittes Filter zur objektbezogenen und dienstbezogenen Datenprüfung des authentifizierten Datenverkehrs. Hierdurch ist gegenüber der die Kommunikationsverbindung und Dienstanwendung sichernden Authentizitätsprüfung eine Zugriffsprüfung, insbesondere eine Rechteprüfung, z. B. Schreib- und/oder Leserechte, sowie zusätzlich eine Datenprüfung, z. B. eine anwendungsspezifische, insbesondere eine inhaltliche Prüfung der Datenübertragung ermöglicht. Unter einer Datenprüfung wird hierbei die Identifizierung, Überwachung und Prüfung von zu übertragenden Datenpaketen oder Datentelegrammen, wie z. B. von Software-Programmen, Datenbausteinen, Funktionsbausteinen, E-Mails, Dateien, in der Art einer Prüfsummenprüfung bzw. eines so genannten Nachrichtenauthentifizierungsverfahrens (z. B. eines message-authentication-code-mac-Verfahrens) verstanden.

Für eine weitere die Sicherheit der Kommunikationsverbindung bzw. des Zugangs oder Zugriffs erhöhende Prüfung umfasst das Sicherheitsmodul vorzugsweise ein viertes Filter zur objektbezogenen und dienstbezogenen Signalprüfung der Kommunikationsanfrage. Dies ermöglicht einen gegenüber der Datenprüfung differenzierten oder weiter abgestuften Schutz vor Fremdeingriffen in das prozess- oder anlagenrelevante Netz (= Produktions- oder Prozessnetz), insbesondere in die Automatisierungskomponente, indem neben den Datenpaketen auch einzelne Signale, wie z. B. Bedien- und Steuersignale für den Fertigungsprozess oder die technische Anlage, identifiziert, überwacht und z. B. auf Zulässigkeit und ggf. in Verbindung mit Rechten geprüft werden.

In einer bevorzugten Ausführungsform bildet das Sicherheitsmodul mit den Filtern eine Form einer anwendungsbezogenen Firewall mit Konfigurationsregeln. Dabei wird der Zugriff oder eine Kommunikationsanfrage mittels der Konfigurationsregeln anhand von Authentifikationszeichen oder Tickets anstelle von so genannten IP-Adressen und ggf. von so genannten IP-Ports weitergeleitet und/oder abgewiesen. Bevorzugt ist die anwendungsbezogene Firewall als Modul eines Projektierungswerkzeugs ausgebildet. Gegenüber der üblichen von einem Systemadministrator zu konfigurierenden Firewall sind bei der anwendungsbezogenen Firewall bedingt durch die Abbildung in einem Projektierungswerkzeug für das Automatisierungssystem dort bereits Informationen und Parameter über die Kommunikationsanfrage hinterlegt. Bevorzugt wird dabei die Kommunikationsanfrage oder Kommunikationsverbindung anhand der zwischen dem Kommunikationsteilnehmer und der Automatisierungskomponente angeordneten anwendungsbezogenen oder -spezifischen Firewall mit Konfigurationsregeln in Form der Filter projektiert, generiert und/oder überwacht und/oder geprüft. In einer besonders einfachen Ausführungsform wird die Kommunikationsanfrage in Form von einfachen Kommunikationsbeziehungen zwischen dem Kommunikationsteilnehmer und der Automatisierungskomponente projektiert und hinterlegt.

Durch eine derartige Integration des Sicherheitsmoduls als konfigurierbare Firewall im Projektierungswerkzeug ist sichergestellt, dass sowohl die Hardware- als auch die Software-Konsistenz im gesamten Automatisierungssystem nicht unterbrochen wird. Wird beispielsweise ein neuer Kommunikationspartner, z. B. ein Kommunikationsteilnehmer oder eine Automatisierungskomponente, hinzugefügt, so genügt es, die entsprechenden Parameter im Projektierungswerkzeug einzugeben, so dass beim anschließenden Neuladen des Sicherheitsmoduls eine automatische Konfiguration der Firewall ausgeführt wird. Hierdurch sind manuelle Fehler beim manuellen Konfigurieren der Firewall sicher vermieden. Darüber hinaus ist auch bei einem defekten Sicherheitsmodul ein einfacher Austausch möglich, da das neu zu integrierende Sicherheitsmodul automatisch mittels des Projektierungswerkzeugs mit den Konfigurationsregeln geladen und aktiviert wird. Ferner können durch die modulartige anwendungsspezifische Firewall mehrere Firewalls vom Projektierungswerkzeug erzeugt, verwaltet, überwacht und aktiviert werden.

Die zweitgenannte Aufgabe wird erfindungsgemäß bei einem Sicherheitsmodul gelöst, indem mindestens ein Filter zur Überwachung und Prüfung einer Kommunikationsanfrage vorgesehen ist, wobei in einem ersten Filter anhand eines der Kommunikationsanfrage zugeordneten Tickets mit dem Kommunikationsteilnehmer ein authentifizierter Datenverkehr aufgebaut wird, in welchem eine der Kommunikationsanfrage zugrunde liegende Datenübertragung zur Automatisierungskomponente in Abhängigkeit des Prüfungsergebnisses freigeschaltet oder gesperrt wird.

Bezüglich des Verfahrens wird die Aufgabe erfindungsgemäß gelöst, indem eine Kommunikationsanfrage in mindestens einer Stufe überwacht und geprüft wird, wobei anhand eines der Kommunikationsanfrage zugeordneten Tickets zwischen einem der Kommunikationsteilnehmer und einem Sicherheitsmodul ein authentifizierter Datenverkehr aufgebaut wird, in welchem eine der Kommunikationsanfrage zugrunde liegende Datenübertragung in Abhängigkeit des Prüfungsergebnisses freigeschaltet oder gesperrt wird.

Für eine Skalierung von mehreren Sicherheitsstufen für die Prüfung und Freigabe der Datenübertragung wird beispielsweise in einer ersten Stufe mittels des Tickets eine objektbezogene und dienstbezogene Authentizitätsprüfung und ggf. zusätzlich in einer zweiten Stufe eine objektbezogene und dienstbezogene Zugriffsprüfung ausgeführt, wobei anhand der ersten Stufe und der zweiten Stufe die Kommunikationsanfrage freigeschaltet oder gesperrt wird. Mit anderen Worten: In der ersten Stufe wird mittels des Tickets die Identität und Authentifizierung mindestens einer der beiden Teilnehmer der Kommunikationsverbindung und in der zweiten Stufe die Protokollzulassung geprüft.

Alternativ oder zusätzlich kann zur Prüfung des genannten Netz- und/oder Protokollzugangs beispielsweise in einer dritten Stufe eine objektbezogene und dienstbezogene Datenprüfung und/oder beispielsweise in einer vierten Stufe eine objektbezogene und dienstbezogene Signalprüfung ausgeführt werden. Dabei erfolgt die Prüfung der Kommunikationsanfrage in einer bevorzugten Ausführungsform hierarchisch abgestuft von der ersten Stufe bis zur vierten Stufe, d. h. die Autorisierung erfolgt anhand einer feingestuften Authentifizierung, wobei die ersten beiden Stufen der Autorisierung für Dienste und Objekte und die dritte und vierte Stufe der Autorisierung der zu übertragenden Daten dient. Je nach Vorgabe können die einzelnen Stufen sowohl in der Anzahl als auch in der Reihenfolge der Prüfung beliebig variiert werden. Alternativ kann lediglich in der ersten Stufe eine Authentizitätsprüfung und in den nachfolgenden Stufen eine inhaltliche Prüfung der Protokolle oder Befehle oder Daten ausgeführt werden.

Die mit der Erfindung erzielten Vorteile bestehen insbesondere darin, dass durch Integration eines Sicherheitsmoduls mit einem Prüffilter für ein einer Kommunikationsanfrage zugeordnetes Ticket in eine Kommunikationsverbindung zwischen zwei Ebenen oder innerhalb einer Ebene eines gemeinsamen Automatisierungssystems ein authentifizierter Datenverkehr aufgebaut wird. Hierdurch ist gegenüber der derzeit ungesicherten Kommunikationsverbindung zwischen Teilnehmern innerhalb eines Automatisierungsnetzes eine erhöhte Sicherheit in der Datenübertragung ermöglicht. Insbesondere kann das Sicherheitsmodul bei einer separaten Ausbildung vor eine bereits vorhandene Automatisierungskomponente geschaltet und somit nachgerüstet werden. Des Weiteren sind bedingt durch eine derartige separate Ausführung des Sicherheitsmoduls keine Ergänzungen oder kein zusätzliches Wissen in der Automatisierungskomponente erforderlich. Darüber hinaus sind die Komponenten des Automatisierungsteilnetzes, insbesondere eines so genannten Produktionsnetzes, hinsichtlich der Datenprüfung wesentlich entlastet. Ferner ermöglicht eine derartige separate Ausführung des Sicherheitsmoduls in der Art einer Firewall mit modifizierten Konfigurationsregeln eine Konfiguration der Kommunikationsverbindung oder -anfrage eines der Kommunikationsteilnehmer an eine Automatisierungskomponente oder umgekehrt in der Art einer mehrstufigen Prüfung mittels des Sicherheitsmoduls mit den Filtern.

Zusammenfassend ermöglicht das Sicherheitsmodul einen besonders hohen und sicheren Schutz des Automatisierungssystems vor Fremdeingriffen, da nur authentifizierte und autorisierte Zugriffe mittels Filtertechnik des Sicherheitsmoduls freigeschaltet werden. Darüber hinaus ist das Automatisierungssystem von zusätzlichen Funktionen und Aufgaben entlastet. Ferner sind Störungen oder Fehleingriffe in den Automatisierungsprozess sicher vermieden.

Ausführungsbeispiele der Erfindung werden anhand einer Zeichnung näher erläutert. Darin zeigen:
- FIG 1: schematisch eine Vorrichtung mit einem Sicherheitsmodul zur sicheren Kommunikation eines Kommunikationsteilnehmers mit mindestens einer Automatisierungskomponente eines Automatisierungssystems und
- FIG 2 bis 4: schematisch ein Sicherheitsmodul mit mehreren Filtern zur Prüfung einer Kommunikationsanfrage.

Einander entsprechende Teile sind in allen Figuren mit den gleichen Bezugszeichen versehen.

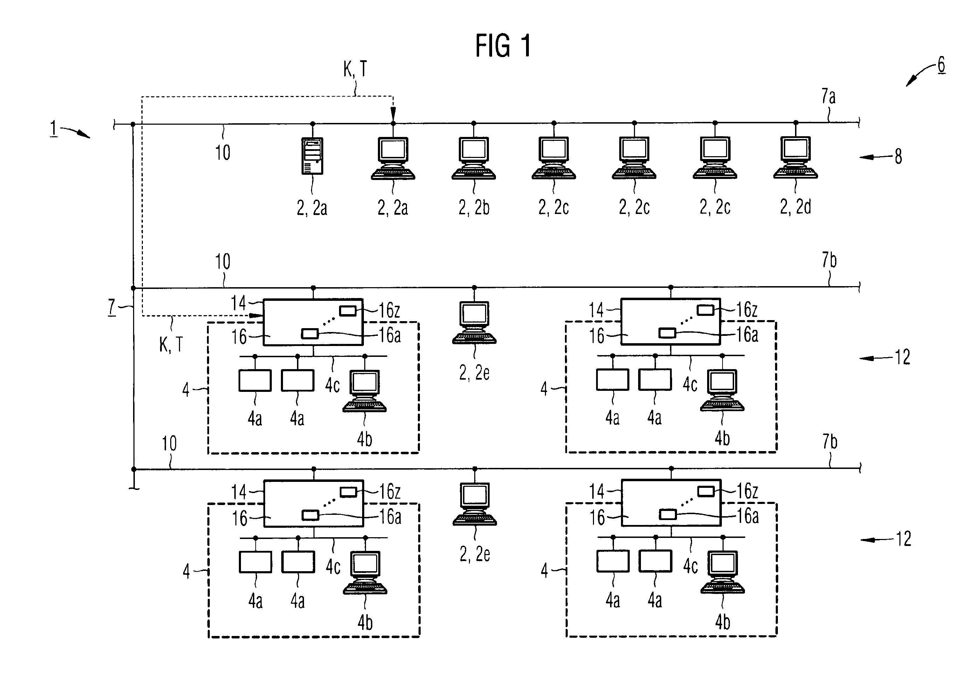

Die FIG 1 zeigt eine Vorrichtung 1 zur Kommunikation eines Kommunikationsteilnehmers 2 mit einer Automatisierungskomponente 4 eines Automatisierungssystems 6 innerhalb eines gemeinsamen Automatisierungsnetzes 7. Das Automatisierungssystem 6 dient beispielsweise der Steuerung und/oder Regelung einer nicht näher dargestellten technischen Anlage, z. B. einer Chemieanlage oder einer Kraftwerksanlage. Dabei ist das Automatisierungsnetz 7 (auch Firmen- oder Anlagennetz genannt) bevorzugt unterteilt in mehrere Teilnetze 7a und 7b, wobei ein übergeordnetes Teilnetz 7a als Büronetz dient (im Weiteren Büronetz 7a genannt) und ein weiteres Teilnetz 7b als Prozess- oder Produktionsnetz der Automatisierung des Prozesses bzw. der Produktion der technischen Anlage dient (im Weiteren Produktionsnetz 7b genannt).

Der Kommunikationsteilnehmer 2 ist beispielsweise ein Server 2a, ein Programmiergerät 2b, eine Bedien- und Beobachtungsstation 2c oder ein Bürocomputer 2d, ein Projektierungs-, Wartungs-, Service- und/oder Diagnosewerkzeug 2e, welche Komponenten des Büronetzes 7a und beispielsweise einer ersten Automatisierungsebene 8, z. B. einer zentralen Leit- und Steuerebene, des Automatisierungssystems 6 sind.

Die Automatisierungskomponenten 4 sind beispielsweise speicherprogrammierbare Steuerungen 4a und eine lokale Bedienund Beobachtungseinheit 4b, welche Komponenten des Produktionsnetzes 7b sind und welche bedarfsweise zu einem Automatisierungsteilnetz 4c geschaltet sind. Die Summe aller Automatisierungskomponenten 4a, 4b, 4c in einem Automatisierungsteilnetz 4c bilden dabei z. B. eine Automatisierungszelle oder Teilanlage.

Über eine Datenübertragungseinheit 10 sind die Kommunikationsteilnehmer 2, 2a bis 2e des Büronetzes 7a an die Automatisierungskomponenten 4, 4a bis 4c des Produktionsnetzes 7b angebunden und sind somit Komponenten des Automatisierungsnetzes 7. Je nach Art und Aufbau des Automatisierungssystems 6 bilden die Automatisierungskomponenten 4, 4a bis 4c eine zweite Automatisierungsebene 12, z. B. eine Prozess- oder Automatisierungsebene. Je nach Art und Ausführung der Datenübertragungseinheit 10 kann diese drahtlos als Funkübertragung oder verkabelt als ein LAN (= Local Area Network) oder ein Ethernetbussystem ausgebildet sein.

Die Vorrichtung 1 umfasst zum Schutz der Kommunikation der Automatisierungskomponente 4 mit dem Kommunikationsteilnehmer 2 oder umgekehrt ein Sicherheitsmodul 14. Das Sicherheitsmodul 14 ist dabei bevorzugt separat ausgebildet und zwischen den Kommunikationsteilnehmer 2 und die Automatisierungskomponente 4 geschaltet. Dabei dient das Sicherheitsmodul 14 insbesondere dem Schutz der Automatisierungskomponente 4 vor einem unberechtigten Zugriff eines Kommunikationsteilnehmers 2 der ersten, das Büronetz 7a bildenden Automatisierungsebene 8 und somit der Sicherheit der Datenübertragung innerhalb des gemeinsamen Automatisierungsnetzes 7. Darüber hinaus kann das Sicherheitsmodul 14 auch dem Schutz vor Zugriffen aus einem öffentlichen Netz dienen, da unter Umständen die Kommunikationsteilnehmer 2, 2a bis 2e mit Programmen versehen sind, welche einen Zugriff aus einem öffentlichen Netzwerk, z. B. dem Internet, auf das so genannte "private" gemeinsame Automatisierungsnetz 7 und somit auf die Automatisierungsebene 8 und 12, d. h. auf das Büronetz 7a und das Produktionsnetz 7b mit den prozessrelevanten Automatisierungsteilnetzen 4c, ermöglichen.

Das Sicherheitsmodul 14 weist zur Prüfung und Überwachung einer einzelnen Kommunikationsanfrage K mindestens ein Filter 16 auf, anhand dessen mittels eines der Kommunikationsanfrage K zugeordneten, gesicherten Authentifikationszeichens T (= Ticket oder Zertifikat) ein authentifizierter Datenverkehr zwischen dem betreffenden Kommunikationsteilnehmer 2, 2a bis 2e und dem betreffenden Sicherheitsmodul 14 aufgebaut wird. Das Authentifikationszeichen T wird nachfolgend kurz Ticket T genannt. Dabei wird mittels des Tickets T anhand des authentifizierten Datenverkehrs eine der Kommunikationsanfrage K zugrunde liegende Datenübertragung freigeschaltet oder gesperrt.

Je nach Art und Aufbau des Sicherheitsmoduls 14 umfasst dieses für eine differenzierte und mehrstufige Sicherheitsabfrage und somit für eine hierarchische Prüfung der Kommunikationsanfrage K mehrere Filter 16a bis 16z. Dabei dienen ein erstes Filter 16a und ein zweites Filter 16b zur Überwachung und Prüfung der betreffenden Verbindung. Hierzu wird mittels des ersten Filters 16a eine objektbezogene und/oder dienstbezogene Authentizitätsprüfung anhand eines Identitätszeichens oder des Tickets T und mittels des zweiten Filters 16b eine objektbezogene und dienstbezogene Zugriffsprüfung ausgeführt. Mit anderen Worten: Das erste Filter 16a wird derart konfiguriert, dass die Kommunikationsanfrage K nur dann freigeschaltet wird, wenn die zugrunde liegende Kommunikationsverbindung authentifiziert und autorisiert ist. Das heißt, nur bei einer Kommunikationsverbindung zwischen vorgegebenen Objekten, z. B. zwischen einer vorgegebenen Automatisierungskomponente 4 und einem vorgegebenen Kommunikationsteilnehmer 2 oder umgekehrt, wird die Kommunikationsanfrage K freigeschaltet. Somit werden vor der eigentlichen Datenübertragung durch die Kommunikationsanfrage K die der Kommunikationsverbindung zugeordneten Geräte oder Objekte sicher als zugelassene Sender und/oder Empfänger identifiziert.

Mit anderen Worten: Im Fall, dass ein Kommunikationsteilnehmer 2 (auch Client genannt) auf einen Dienst im zu schützenden Automatisierungsteilnetz 4c zugreifen will (= Kommunikationsanfrage K), wird der betreffende Kommunikationsteilnehmer 2 mittels des Sicherheitsmoduls 14 autorisiert, wenn der Kommunikationsteilnehmer 2 sich anhand des zugehörigen Tickets T authentifizieren kann. Je nach Skalierungsstufe der Authentizitätsprüfung mittels des Sicherheitsmoduls 14 kann für alle im Automatisierungsteilnetz 4c möglichen Dienste ein gleiches gemeinsames Ticket T (= "Netz-Ticket") verwendet werden. Je nach Struktur des Automatisierungsteilnetzes 4c kann ein Ticket T (= "Host-Ticket") nur für einen Server und für die auf diesem Server vorhandenen Dienste vergeben werden. Alternativ oder zusätzlich kann für gleichartige Dienste, z. B. Druckdienste, auf verschiedenen Teilnehmern oder Rechnern ein gemeinsames Ticket T ausgestellt werden. Des Weiteren wird bei hohen Sicherheitsanforderungen für jeden Rechner oder Teilnehmer und/oder für jeden Dienst ein separates Ticket T (= "Dienste-Ticket") verwendet. Somit wird mittels des ersten Filters 16a die Kommunikationsanfrage K anhand eines der Tickets T dahingehend überwacht, geprüft und autorisiert, dass die betreffende Kommunikationsanfrage K authentifiziert ist.

Mittels des zweiten Filters 16b wird objekt- und/oder dienstbezogen die Kommunikationsanfrage K anhand von Zugriffsrechten, welche den Objekten oder Geräten und/oder den Diensten zugeordnet sind, freigeschaltet. Die zugrunde liegenden Filterfunktionen des zweiten Filters 16b werden daher auch als "Service-Ticket" bezeichnet. Anhand des Service-Tickets wird dabei geprüft, ob die betreffende Kommunikationsanfrage K auf mindestens einer vorgegebenen Applikation oder einem Protokoll, z. B. Ferndiagnose-Programm oder Fernwartungs-Programm, oder einem vorgegebenen Dienst, z. B. einem FTP-Server im Automatisierungsgerät oder einem Server für ein Automatisierungsprotokoll, beruht. Dabei wird je nach Art und Umfang der Zugriffsrechte die Übertragungsrichtung und/oder der Datenumfang einer der Kommunikationsanfrage K zugrunde liegenden Datenübertragung überwacht, geprüft und gesteuert. Mit anderen Worten: Die Kommunikationsanfrage K, z. B. die Übertragung von Telegrammen oder Dateien, wird nur dann ausgeführt und somit durch das zweite Filter 16b freigeschaltet, wenn ein vorgegebenes Zugriffsrecht für den Dienst und/oder die Objekte der Automatisierungskomponente 4 bzw. des Kommunikationsteilnehmers 2 vorliegt. Hierdurch ist sichergestellt, dass die Datenübertragung der bereits mittels des ersten Filters 16a authentifizierten und/oder autorisierten Kommunikationsverbindung zum einen nur für vorgegebene und somit zugelassene Dienste und zum anderen nur in vorgegebener und somit zugelassener Übertragungsrichtung und/oder mit vorgegebener und somit zugelassener Datenmenge belastet wird.

Alternativ oder zusätzlich zur Authentizitätsprüfung und Zugriffsprüfung der Datenübertragung durch das erste bzw. zweite Filter 16a bzw. 16b kann mittels eines dritten Filters 16c und eines vierten Filters 16d eine inhaltliche Überwachung und Prüfung der Datenübertragung und daraus resultierend eine Freigabe der Kommunikationsanfrage K ausgeführt werden. Das dritte Filter 16c dient einer objekt- und/oder dienstbezogenen Datenprüfung. Dabei werden die der Kommunikationsanfrage K zugrunde liegenden Datenpakete oder Datentelegramme identifiziert, inhaltlich geprüft und ggf. freigeschaltet. Hierbei wird beispielsweise anhand von hinterlegten Portnummern oder Dienstenamen für Datenpakete oder Datentelegramme der jeweiligen Kommunikationsanfrage K und/oder Kommunikationsverbindung das aktuell zu übertragende Datenpaket bzw. Datentelegramm auf Gleichheit und somit Relevanz geprüft. Die inhaltliche Prüfung mittels des dritten Filters 16c umfasst somit eine Integritätsprüfung zur Erhöhung der Sicherheit, beispielsweise anhand einer Prüfsumme und/oder anhand eines so genannten message-authentication-code-Verfahrens und/oder anhand einer Plausibilitätsprüfung. Mittels des vierten Filters 16d wird darüber hinaus für einen verfeinerten Schutz der identifizierten Kommunikationsverbindung eine objektbezogene und/oder dienstbezogene Signalprüfung ausgeführt. Beispielsweise werden neben der sicheren Authentifizierung und Freischaltung der Datenpakete oder Datentelegramme einzelne Signale oder Befehle, z. B. Bedien- und/oder Steuersignale, zur Steuerung und/oder Regelung der technischen Anlage oder des Fertigungsprozesses identifiziert, inhaltlich geprüft und ggf. freigeschaltet oder gesperrt. Im Fall einer authentifizierten und autorisierten Kommunikationsanfrage K wird das dieser zugrunde liegende Automatisierungsprotokoll dahingehend analysiert, ob die übertragenen Signale (= Kommandos, Befehle, Zustände), z. B. beim Lesen bzw. Schreiben eines bestimmten Datenbausteins in die Automatisierungskomponente 4a, zulässig sind oder nicht. Die Zulässigkeitsprüfung erfolgt vorzugsweise anhand von dem betreffenden Ticket T oder Authentizitätszeichen zugrunde liegenden Berechtigungen. Das heißt, bei der Prüfung wird analysiert, ob der betreffende Client, Benutzer oder Kommunikationsteilnehmer 2 z. B. schreiben, lesen oder ein Programm ausführen oder mehreres für ein oder mehrere Objekte darf.

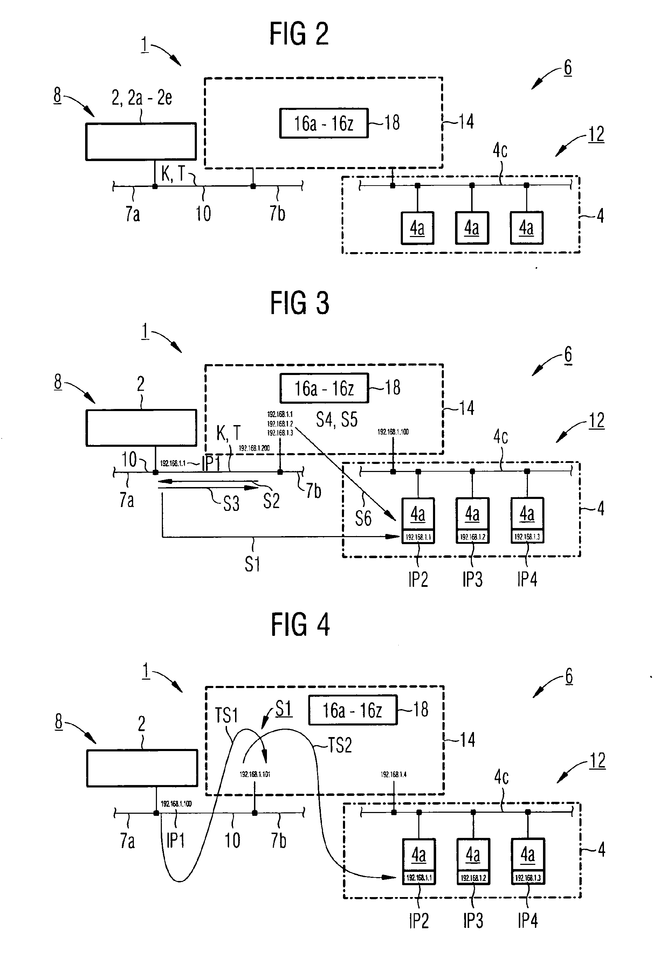

Je nach Art und Ausbildung können weitere Filter 16e bis 16z vorgesehen sein. Bevorzugt bildet das Sicherheitsmodul 14 gemäß Figur 2 eine Art modifizierte anwendungsbezogene Firewall 18 mit Konfigurationsregeln in Form der Filter 16a bis 16z. Dabei ist die anwendungsbezogene oder -spezifische Firewall 18 gegenüber einer herkömmlichen Firewall dahingehend ausgelegt, dass die nunmehr modifizierte Firewall 18 in einem ersten Schritt eine Authentizitätsprüfung anhand des Tickets T ermöglicht. Durch die separate Anordnung, d. h. die Vorschaltung des Sicherheitsmoduls 14 als anwendungsbezogene Firewall 18 vor dem Automatisierungsteilnetz 4c und somit vor die zu sichernden Automatisierungskomponenten 4, 4a, erfüllt die modifizierte Firewall 18 eine Sicherungs- und Schutzfunktion auch für nicht-ticketfähige Automatisierungskomponenten 4, 4a. Durch die Schaltung des Sicherheitsmoduls 14 zwischen den zwei Automatisierungsebenen 8 und 12 ist das nicht gesicherte Büronetz 7a mit dem Produktionsnetz 7b innerhalb des gemeinsamen Automatisierungsnetzes 7 verbunden, wobei dennoch das Produktionsnetz 7b, insbesondere dessen Automatisierungsteilnetz 4c, über die Filter 16a bis 16z des Sicherheitsmoduls 14 vor unberechtigten Zugriffen aus dem Büronetz 7a oder einem öffentlichen Netz gesichert ist. Darüber hinaus ist die anwendungsbezogene Firewall 18 als Modul eines Projektierungswerkzeugs abgebildet, welches über das Automatisierungsnetz 7 eine automatische Generierung, Änderung, Überwachung und/oder Aktivierung einzelner Konfigurationsregeln, Kommunikationsbeziehungen und/oder einer gesamten Firewall 18 ermöglicht.

Anhand der Figuren 2 bis 4 wird das Verfahren zur Kommunikation zwischen den Automatisierungskomponenten 4 und dem Kommunikationsteilnehmer 2 näher beschrieben. Dabei umfasst das Automatisierungssystem 6 beispielsweise als Automatisierungskomponenten 4 drei Automatisierungsgeräte oder speicherprogrammierbare Steuerungen 4a, welche über ein Kommunikationsnetz oder Automatisierungsteilnetz 4c miteinander verbunden sind. Zum Schutz vor einer unberechtigten Datenübertragung aus der zentralen Automatisierungsebene 8, z. B. aus dem Büronetz 7a, in die lokale Automatisierungsebene 12 umfasst die jeweilige Automatisierungskomponente 4 vorgeschaltet oder integriert das Sicherheitsmodul 14. Das Sicherheitsmodul 14 ist mittels der Datenübertragungseinheit 10 mit dem Kommunikationsteilnehmer 2 verbunden. Mit anderen Worten: Das Sicherheitsmodul 14 ist der Automatisierungskomponente 4 und somit der Automatisierungsebene 12 vorgeschaltet.

Zur beidseitigen Prüfung der Datenübertragung, d. h. zur Prüfung der Kommunikation von außen (= vom nicht gesicherten Büronetz 7a des Automatisierungsnetzes 7) nach innen (= ins zu sichernde Produktionsnetz 7b, insbesondere Automatisierungsteilnetz 4c) bzw. von innen nach außen, umfasst das Sicherheitsmodul 14 das Filter 16 oder mehrere Filter 16a bis 16z. Das Sicherheitsmodul 14 kann dabei als ein Personalcomputer oder ein Server oder als ein für die Automatisierungstechnik typisches Gerät, z. B. ein so genannter Switch, Router, Kommunikationsprozessor oder eine CPU, ausgeführt sein. Je nach Art und Aufbau des Sicherheitsmoduls 14 können die Filter 16a bis 16z separat ausgebildet oder in einem gemeinsamen Modul integriert sein.

In einer bevorzugten Ausführungsform sind zur Authentizitätsprüfung und Zugriffsprüfung je Verbindungsrichtung - von außen nach innen und umgekehrt - ein erstes und ein zweites Filter 16a bzw. 16b vorgesehen. Zusätzlich zur dienst- und/oder objektbezogenen Authentizitätsprüfung und/oder Zugriffsprüfung der Kommunikationsverbindung zwischen der jeweiligen Automatisierungskomponente 4 und dem Kommunikationsteilnehmer 2 sind ein drittes und ein viertes Filter 16c bzw. 16d zur Datenprüfung bzw. Signalprüfung vorgesehen.

In einer nicht näher dargestellten alternativen Ausführungsform kann lediglich das erste Filter 16a zur Authentizitätsprüfung vorgesehen sein. Das zweite Filter 16b zur Prüfung der Zugriffsrechte kann als separates Modul analog zu den dritten und vierten Filtern 16c, 16d ausgebildet sein. Hierdurch sind sämtliche datenbezogene Filter 16b bis 16d separat ausgebildet, so dass diese nachträglich in ein bereits vorhandenes Sicherheitsmodul 14 eingefügt werden können. Darüber hinaus ist durch eine derartige separate Ausführungsform der Filter 16a bis 16z sichergestellt, dass ggf. erforderliche Anpassungen aufgrund von Änderungen von Zugriffsrechten oder Änderungen in der zu übertragenden Datenmenge schnell und sicher ausgeführt werden können.

Im Betrieb des Sicherheitsmoduls 14 werden anhand des ersten Filters 16a, wie beispielhaft in der FIG 3 gezeigt ist, in einem ersten Schritt oder in einer ersten Stufe S1 zur Identitätsprüfung der Kommunikationsanfrage K die betreffenden Geräte oder Objekte, z. B. einer der Kommunikationsteilnehmer 2 und eine der Automatisierungskomponenten 4, anhand einer zugehörigen Identifikationsnummer IP1 bzw. IP2 identifiziert und der betreffenden Kommunikationsanfrage K zugeordnet. Dabei sind die die Automatisierungskomponenten 4 betreffenden Identifikationsnummern IP2 im vorgeschalteten Sicherheitsmodul 14 hinterlegt. Hierdurch ist sichergestellt, dass zum Aufbau des authentifizierten Datenverkehrs anhand des Tickets T die hierfür erforderlichen Abfragen und Prüfungen lediglich zwischen dem Sicherheitsmodul 14 und dem anfragenden Kommunikationsteilnehmer 2 ausgeführt werden. Somit sind die Automatisierungsebene 12 und deren Automatisierungskomponenten 4 entlastet. Diese Ausführungsform der Vorrichtung 1 in Form des vorgeschalteten Sicherheitsmoduls 14 mit einem Abbild der Kommunikationsadressen der Automatisierungskomponenten 4 wird bevorzugt bei nicht-ticketfähigen Automatisierungskomponenten 4 verwendet. Dabei simuliert das Sicherungsmodul 14 je nach Richtung des Datenverkehrs die betreffende Automatisierungskomponente 4, 4a bzw. den betreffenden Kommunikationsteilnehmer 2.

Im Detail wird mittels des anfragenden Objekts, z. B. des Kommunikationsteilnehmers 2 mit der Identifikationsnummer IP1, eine Kommunikationsanfrage K über das Sicherheitsmodul 14 an eine der Automatisierungskomponenten 4a mit der Identifikationsnummer IP2 gesendet. Mittels des Sicherheitsmoduls 14, insbesondere mittels des ersten Filters 16a, wird anhand von vorgegebenen Konfigurationsdaten die von dem Kommunikationsteilnehmer 2 gewünschte Kommunikationsverbindung geprüft. Das heißt, es wird in einem zweiten Schritt oder einer zweiten Stufe S2 anhand der Filter 16a bis 16z geprüft, ob die Automatisierungskomponente 4a zuständig ist und ggf. auch, ob es dem Kommunikationsteilnehmer 2 erlaubt ist, eine Kommunikationsverbindung zu dieser Automatisierungskomponente 4a aufzubauen. Ist dies der Fall, antwortet das Sicherheitsmodul 14 in der Art eines Stellvertreters anstelle der Automatisierungskomponente 4a und gibt die Kommunikationsverbindung derart frei, dass der Kommunikationsteilnehmer 2 anschließend mit dem Sicherheitsmodul 14 (= Stellvertreter für Automatisierungskomponente) kommuniziert, in der Annahme, dass es sich um die betreffende Automatisierungskomponente 4a handelt.

In einem dritten Schritt oder in einer dritten Stufe S3 wird dann von dem Kommunikationsteilnehmer 2 das Datenpaket oder das Datentelegramm an das Sicherheitsmodul 14 gesendet. Dabei wird das vom Sicherheitsmodul 14 empfangene Datenpaket oder Datentelegramm zum Schutz des Automatisierungsteilnetzes 4c mittels des zweiten Filters 16b bezüglich der Zugriffsrechte des Kommunikationsteilnehmers 2 anhand von hinterlegten Rechten dienst- und/oder objektbezogen identifiziert, geprüft und freigegeben. Beispielsweise sind dazu die das Automatisierungssystem 6 repräsentierenden Dienste in Form von Portnummern oder Dienstidentifikationszeichen für Dienstprotokolle als Bezugswerte hinterlegt, anhand deren das der Kommunikationsanfrage K zugrunde liegende Protokoll verglichen und ggf. bei Gleichheit freigeschaltet wird. Darüber hinaus wird anhand von hinterlegten Zugriffsrechten mittels des zweiten Filters 16b objekt- oder benutzerabhängig geprüft, ob dem externen Kommunikationsteilnehmer 2 beispielsweise ein Lese- und/oder ein Schreibrecht zugeordnet ist.

Dabei sind eine Vielzahl von verschiedenen Rechten skalierbar und prüfbar. Dazu gehören beispielsweise folgende Varianten von Zugriffsrechten:
- Objekten (= einzelnen Automatisierungsgeräten, Kommunikationsteilnehmern) und/oder Objektgruppen (= Kommunikationsnetzen oder Teilnetzen) werden benutzerabhängig Zugriffsrechte zugeordnet, z. B. allen Objekten sind für alle Benutzer Leserechte zugeordnet oder nur eines der Objekte oder eine Objektgruppe ist mit Schreibrechten für jeden Benutzer versehen;
- Objekten oder Benutzern werden so genannte übergreifende oder globale Zugriffsrechte zugeordnet, z. B. einem der Objekte oder einem der Benutzer ist ein Leserecht zu allen anderen Objekten zugeordnet oder einem der Objekte oder der Benutzer ist demgegenüber ein Schreibrecht auf alle anderen Objekten zugeordnet.

Neben der Identitäts- und der Zugriffsprüfung kann darüber hinaus in einem vierten Schritt oder einer vierten Stufe S4 und/oder in einer fünften Stufe S5 mittels des Sicherheitsmoduls 14 anhand des dritten bzw. vierten Filters 16c bzw. 16d eine Datenprüfung bzw. eine Signalprüfung und somit eine inhaltliche Prüfung des Datenpakets oder Datentelegramms ausgeführt werden. In Abhängigkeit von dem Ergebnis der durchlaufenen Filter 16a bis 16z wird erst dann in einem sechsten Schritt oder einer sechsten Stufe S6 die Datenübertragung an das Automatisierungsteilnetz 4c, insbesondere an das betreffende Automatisierungsgerät 4a, freigeschaltet oder gesperrt.

Das Sicherheitsmodul 14 überträgt dann die Daten nach einer Umsetzung, d. h. einer Umwandlung entsprechend einem der Automatisierungskomponente 4a zugeordneten Protokoll, an die Automatisierungskomponente 4a aber nur dann, wenn alle Prüfungen - Authentizitäts-, Zugriffs-, Daten- und/oder Signalprüfung - der Filter 16a bis 16z anhand des Tickets T erfolgreich ausgeführt worden sind und somit die Kommunikationsanfrage K zulässig ist.

Im rückwärtigen Datenverkehr, d. h. von der Automatisierungskomponente 4 zum Kommunikationsteilnehmer 2, werden die Stufen S1 bis S6 in der gleichen Reihenfolge durchlaufen. Darüber hinaus können die Stufen S1 bis S6 noch in weitere Teilschritte, wie in FIG 4 gezeigt, unterteilt werden. Dabei zeigt die FIG 4 ein Beispiel für eine alternative Ausführungsform der Vorrichtung 1 mit dem Sicherheitsmodul 14 für eine nicht-ticketfähige Automatisierungskomponente 4a. Dabei ist in der FIG 4 lediglich die erste Stufe S1 zur Authentizitätsprüfung der Kommunikationsverbindung mittels des ersten Filters 16a dargestellt. Die erste Stufe S1 wird zur Authentizitätsprüfung in zwei Teilstufen TS1 und TS2 unterteilt, wodurch eine zweistufige Adressierungsprüfung oder Authentizitätsprüfung erfolgt. Dabei wird in der ersten Teilstufe TS1 eine vorgelagerte Prüfung des Kommunikationsteilnehmers 2 aus dem nicht sicheren Büronetz 7a, insbesondere eine Prüfung dessen berechtigten Zugriffs auf das zu sichernde Produktionsnetz 7b, ausgeführt, indem als Kommunikationsverbindung die Verbindung des Kommunikationsteilnehmers 2 mit der Firewall 18 überwacht und auf Authentizität geprüft wird. Die zweite Teilstufe TS2 dient der Prüfung der zu sichernden Verbindung zwischen der Firewall 18 und der Automatisierungskomponente 4 im zu sichernden Automatisierungsteilnetz 4c. Hierbei kennt der Kommunikationsteilnehmer 2, z. B. das Programmiergerät 2e oder der Bürocomputer 2b, lediglich die Adresse der Firewall 18 für die von ihm gewählte, aber unbekannte Zieladresse (= Automatisierungskomponente 4a) und sendet das Datenpaket an die Firewall 18. Mittels der Firewall 18 wird dann anhand der Filter 16a bis 16z eine Zuordnung des Datenpakets zu der Zieladresse und somit eine Identifizierung der Automatisierungskomponente 4 und analog wie oben beschrieben eine Authentizitäts- und Zugriffsprüfung sowie ggf. eine Daten- und Signalprüfung ausgeführt. Dabei wird zusätzlich zur Identifizierung und Authentifizierung der Kommunikationsverbindung das Datenpaket anhand der Filter 16c bis 16z auch inhaltlich geprüft.

## Patentansprüche

1. Vorrichtung (1) zur Sicherung eines Datenzugriffs eines Kommunikationsteilnehmers (2) auf mindestens eine Automatisierungskomponente (4) eines Automatisierungssystems (6) innerhalb eines Automatisierungsnetzes (7), umfassend ein Sicherheitsmodul (14) mit mindestens einem Filter (16a bis 16z) zur Überwachung und Prüfung einer Kommunikationsanfrage (K), wobei in einem ersten Filter (16a) anhand eines der Kommunikationsanfrage (K) zugeordneten, gesicherten Authentifikationszeichens (T) zwischen dem Kommunikationsteilnehmer (2) und dem Sicherheitsmodul (14) ein authentifizierter Datenverkehr aufgebaut wird, in welchem eine der Kommunikationsanfrage (K) zugrunde liegende Datenübertragung in Abhängigkeit des Prüfungsergebnisses freigeschaltet oder gesperrt wird.

2. Vorrichtung nach Anspruch 1, bei der das Sicherheitsmodul (14) der Automatisierungskomponente (4) vorgeschaltet ist.

3. Vorrichtung nach Anspruch 1 oder 2, bei der dem Sicherheitsmodul (14) eine eigene Adresse für eine Kommunikationsanfrage (K) zugeordnet ist.

4. Vorrichtung nach einem der Ansprüche 1 bis 3, bei der dem Sicherheitsmodul (14) eine Adresse einer einer betreffenden Kommunikationsanfrage (K) zugehörigen Automatisierungskomponente (4) zugeordnet ist.

5. Vorrichtung nach einem der Ansprüche 1 bis 4, bei der das Sicherheitsmodul (14) als Stellvertreter der Automatisierungskomponente (4) den authentifizierten Datenverkehr ausführt.

6. Vorrichtung nach einem der Ansprüche 1 bis 5, wobei das erste Filter (16a) anhand des Authentifikationszeichens (T) für eine objektbezogene und dienstbezogene Authentizitätsprüfung ausgebildet ist.

7. Vorrichtung nach einem der Ansprüche 1 bis 6, wobei das Sicherheitsmodul (14) ein zweites Filter (16b) für eine objektbezogene und dienstbezogene Zugriffsprüfung des authentifizierten Datenverkehrs umfasst.

8. Vorrichtung nach einem der Ansprüche 1 bis 7, wobei das Sicherheitsmodul (14) ein drittes Filter (16c) zur objektbezogenen und dienstbezogenen Datenprüfung des authentifizierten Datenverkehrs umfasst.

9. Vorrichtung nach einem der Ansprüche 1 bis 8, wobei das Sicherheitsmodul (14) ein viertes Filter (16d) zur objektbezogenen und dienstbezogenen Signalprüfung der Kommunikationsanfrage (K) umfasst.

10. Vorrichtung nach Anspruch 9, wobei das Sicherheitsmodul (14) mittels mindestens eines der Filter (16a bis 16z) eine anwendungsbezogene Firewall (18) mit Konfigurationsregeln bildet.

11. Vorrichtung nach Anspruch 10, wobei die anwendungsspezifische Firewall (18) als Modul eines Projektierungswerkzeugs ausgebildet ist.

12. Sicherheitsmodul (14) zur Sicherung eines Datenzugriffs eines Kommunikationsteilnehmers (2) auf mindestens eine Automatisierungskomponente (4) eines Automatisierungssystems (6) innerhalb eines Automatisierungsnetzes (7) mit mindestens einem Filter (16a bis 16z) zur Überwachung und Prüfung einer Kommunikationsanfrage (K), wobei in einem ersten Filter (16a) anhand eines der Kommunikationsanfrage (K) zugeordneten Authentifikationszeichens (T) mit dem Kommunikationsteilnehmer (2) ein authentifizierter Datenverkehr aufgebaut wird, in welchem eine der Kommunikationsanfrage (K) zugrunde liegende Datenübertragung zur Automatisierungskomponente (4) in Abhängigkeit des Prüfungsergebnisses freigeschaltet oder gesperrt wird.

13. Verfahren zur Sicherung eines Datenzugriffs eines Kommunikationsteilnehmers (2) auf mindestens eine Automatisierungskomponente (4) eines Automatisierungssystems (6) innerhalb eines gemeinsamen Automatisierungsnetzes (7), bei welchem eine Kommunikationsanfrage (K) in mindestens einer Stufe (S1 bis S4, TS1, TS2) überwacht und geprüft wird, wobei anhand eines der Kommunikationsanfrage (K) zugeordneten, gesicherten Authentifikationszeichens (T) zwischen dem Kommunikationsteilnehmer (2) und dem Sicherheitsmodul (14) ein authentifizierter Datenverkehr aufgebaut wird, in welchem eine der Kommunikationsanfrage (K) zugrunde liegende Datenübertragung in Abhängigkeit des Prüfungsergebnisses freigeschaltet oder gesperrt wird.

14. Verfahren nach Anspruch 13, bei dem mittels des Authentifikationszeichens (T) eine objektbezogene und dienstbezogene Authentizitätsprüfung ausgeführt wird.

15. Verfahren nach Anspruch 13 oder 14, bei dem eine objektbezogene und dienstbezogene Zugriffsprüfung für die Kommunikationsanfrage (K) ausgeführt wird.

16. Verfahren nach einem der Ansprüche 13 bis 15, bei dem eine objektbezogene und dienstbezogene Datenprüfung für die Kommunikationsanfrage (K) ausgeführt wird.

17. Verfahren nach einem der Ansprüche 13 bis 16, bei dem eine objektbezogene und dienstbezogene Signalprüfung für die Kommunikationsanfrage (K) ausgeführt wird.

18. Verfahren nach einem der Ansprüche 13 bis 17, bei dem die Kommunikationsanfrage (K) anhand einer zwischen dem Kommunikationsteilnehmer (2) und der Automatisierungskomponente (4) angeordneten anwendungsbezogenen Firewall (18) mit Konfigurationsregeln in Form von Filtern (16a bis 16z) projektiert, generiert und/oder überwacht und/oder geprüft wird.

19. Verfahren nach einem der Ansprüche 12 bis 18, bei dem die Kommunikationsanfrage (K) in Form von einfachen Kommunikationsbeziehungen zwischen dem Kommunikationsteilnehmer (2) und der Automatisierungskomponente (4) projektiert und hinterlegt wird.
